# FASCICULE DE BREVET EUROPEEN

(11) **EP 4 024 256 B1**
(45) Date de publication et mention de la délivrance du brevet: **29.05.2024**
(21) Numéro de dépôt: 21211511.7
(22) Date de dépôt: 30.11.2021
(51) Int. Cl.: G06F 21/86, H05K 3/34, H05K 1/02

(54) **ÉLÉMENT DE SÉCURITÉ, CARTE ÉLECTRONIQUE, TERMINAL DE PAIEMENT ÉLECTRONIQUE, PROCÉDÉ DE FABRICATION ET PROCÉDÉ D ASSEMBLAGE CORRESPONDANTS**
SICHERHEITSELEMENT, ELEKTRONISCHE KARTE, ENTSPRECHENDES ELEKTRONISCHES ZAHLUNGSENDGERÄT, HERSTELLUNGSVERFAHREN UND ZUSAMMENBAUVERFAHREN
SECURITY ELEMENT, ELECTRONIC CARD, ELECTRONIC PAYMENT TERMINAL, CORRESPONDING METHOD FOR MANUFACTURING SAME AND ASSEMBLY METHOD.

(30) Priorité: 04.12.2020 FR 2012695
(43) Date de publication de la demande: 06.07.2022
(73) Titulaire: Banks and Acquirers International Holding, 75015 Paris (FR)
(72) Inventeur: PAVAGEAU, Stéphane, 26600 LA ROCHE DE GLUN (FR); BONNET, Eric, 26120 MALISSARD (FR)
(74) Mandataire: Germain Maureau

(56) Documents cités:
- EP-A1- 1 928 008
- EP-A1- 2 821 894
- WO-A1-2005/024872
- WO-A2-2004/021381

## Description

### Domaine de l'invention

Le domaine de l'invention est celui des dispositifs électroniques comprenant au moins une carte électronique sur laquelle sont implantés des composants électroniques.

Plus précisément, l'invention concerne la sécurisation et l'amélioration des performances d'une telle carte électronique.

L'utilisation de telles cartes électroniques est très répandue dans l'industrie. Par ailleurs, de nombreux domaines exigent des niveaux de sécurité élevés en termes de confidentialité des signaux électriques transitant dans les équipements. L'invention a ainsi de nombreuses applications, notamment, mais non exclusivement, dans les domaines des terminaux de paiement électronique, les lecteurs de cartes de paiement, dans les décodeurs de télévision, etc., et plus particulièrement pour la détection de tentative d'intrusion dans de tels dispositifs électroniques.

### Art antérieur et ses inconvénients

On s'attache donc plus particulièrement dans la suite de ce document à décrire une problématique existante dans le domaine des terminaux de paiement électronique à laquelle ont été confrontés les inventeurs de la présente demande de brevet, relative aux composants particuliers que sont les éléments ou dômes de sécurité classiquement utilisés dans les terminaux de paiement électronique.

Ces composants spécifiques sont notamment mis en oeuvre dans le but de détecter une intrusion au sein d'un terminal de paiement électronique, dans le cadre plus global d'un système de sécurisation d'un tel dispositif. Ainsi, un dôme de sécurité est positionné à un emplacement stratégique d'une carte électronique dans un terminal de paiement électronique, de manière à fermer un circuit électrique lorsque le boitier du terminal de paiement électronique est fermé, du fait d'une contrainte qui s'applique sur le dôme de sécurité. Ainsi, lorsque le terminal de paiement électronique subit une tentative d'ouverture, ou d'intrusion, le dôme de sécurité se trouve « libéré » de cette contrainte et ouvre le circuit électrique, lequel est relié à un module de détection d'intrusion déclenchant ensuite des actions de sécurisation du terminal de paiement électronique (comme par exemple l'effacement de toutes les données sensibles, la mise en erreur du terminal de paiement électronique ...).

Il existe à ce jour deux techniques principales de pose/d'implantation de ces dômes de sécurité sur une carte électronique : le collage et le brasage (ou soudure).

Selon la première technique, les dômes de sécurité sont collés sur une carte électronique, de façon manuelle, par un opérateur, après la pose et le brasage des autres composants de la carte électronique. De tels dômes de sécurité sont classiquement composés de plusieurs éléments, dont une partie métallique pour assurer la connexion électrique et une ou plusieurs parties adhésives permettant la pose par collage du dôme et de la protection de la partie métallique. Cette technique de pose par collage manuel engendre des difficultés de précision dans le positionnement des dômes de sécurité sur la carte électronique et peut générer ensuite des problèmes lors du fonctionnement du terminal de paiement électronique, par exemple par la détection de fausse intrusion si un ou plusieurs dômes sont mal positionnés sur leur zone de sécurité. En effet, le positionnement d'un dôme de sécurité nécessite non seulement une très grande précision, mais peut également être rendu délicat selon l'emplacement sur la carte électronique. En effet, les composants déjà positionnés (par brasage) sur la carte électronique peuvent soit occulter l'emplacement du dôme soit gêner son positionnement. Enfin, cette technique manuelle présente des inconvénients en termes de rendement de pose, ce rendement étant directement lié à la capacité de l'opérateur à réaliser cette opération. Cette technique de pose par collage peut donc générer des productivités faibles et ainsi augmenter les coûts de fabrication des cartes électroniques sur lesquelles des dômes de sécurité sont implantés.

Selon la deuxième technique, les dômes de sécurité sont soudés sur une carte électronique, de façon automatique.

L'inconvénient principal de cette technique réside dans les problèmes de fiabilité à l'usage, dus au fait que la brasure/soudure est sollicitée continuellement par le stress mécanique, ou la contrainte, que subit le dôme de sécurité. Par ailleurs, le joint brasé n'étant pas reproductible dans sa forme, il est difficile de définir des règles de fiabilité de pose et d'usage selon cette technique.

Il existe donc un besoin pour une technique de pose de dômes de sécurité sur une carte électronique qui permette une fiabilité optimale de pose et une fiabilité optimale à l'usage.

Les documents WO 2004/021381 A2, WO 2005/024872 A1, EP 1 928 008 A1 et EP 2 821 894 A1 décrivent des exemples de l'état de la technique antérieure pertinent.

### Exposé de l'invention

L'invention répond à ce besoin en proposant un élément de sécurité destiné à être relié électriquement à une carte électronique, l'élément de sécurité comprenant au moins :
- une partie métallique, appelée dôme ;
- un ensemble conducteur comprenant une pluralité de pistes conductrices non connectées entre elles et comprenant au moins une piste dite extérieure et une piste dite centrale, lesdites pistes extérieure et centrale présentant chacune au moins une languette conductrice destinée à relier respectivement lesdites pistes extérieure et centrale à ladite carte électronique ;
- un support non conducteur pour ladite pluralité de pistes conductrices dudit ensemble conducteur présentant des lumières via lesquelles lesdites languettes conductrices s'étendent desdites pistes extérieure et centrale vers ladite carte électronique ; l'extrémité de chacune desdites languettes conductrices destinée à être en contact avec ladite carte électronique ne s'étendant pas au-delà dudit ensemble non conducteur de sorte que les liaisons entre lesdites pistes extérieure et centrale et ladite carte électronique se situent sous la face inférieure dudit ensemble non conducteur.

Ainsi, la présente technique propose une solution nouvelle et inventive pour offrir des éléments de sécurité fiables, robustes, peu coûteux et selon un procédé industrialisable. Pour ce faire, l'ensemble des pistes conductrices formant l'élément de sécurité, avec le dôme métallique, est surmoulé dans un matériau plastique, pour former un support aux pistes conductrices avec des ouvertures pour les contacts entre les pistes conductrices et la carte électronique sur laquelle l'élément de sécurité est implanté. Ainsi, la fabrication d'éléments de sécurité selon la présente technique peut être aisément industrialisable, donc réduire les coûts de fabrication, tout en offrant une fiabilité de détection d'intrusion dans un dispositif électronique dans lequel de tels éléments de sécurité sont implantés.

De cette manière également, ces pistes se trouvent surélevées par rapport à la carte électronique, évitant ainsi les migrations de résidus de soudure.

Enfin, les liaisons entre les pistes conductrices et la carte électroniques ne sont pas accessibles par l'extérieur de l'élément de sécurité, renforçant ainsi très fortement la sécurité de l'élément de sécurité. En effet, les liaisons sont mises en oeuvre via des languettes s'étendant à travers des lumières prévues dans l'ensemble non conducteur de manière sensiblement verticale, de sorte à ne pas dépasser de l'élément de sécurité lorsqu'il est implanté sur la carte électronique, contrairement aux techniques connues selon lesquelles la piste centrale et la piste extérieure sont soudées sur la carte via des prolongements dépassant chacun de l'élément de sécurité lui-même. Selon la présente technique, l'élément de sécurité est en fait soudé comme un composant de type « BGA » (pour « Ball Grid Array »), c'est-à-dire un boitier intégré pouvant être soudé sur la carte électronique via une matrices de billes sous sa surface. Ici, l'élément de sécurité est relié à la carte électronique via des liaisons sous sa face inférieure et non des liaisons dépassant sur ses côtés.

Selon un aspect particulier, l'ensemble conducteur comprend en outre une piste dite intermédiaire située entre la piste centrale et la piste extérieure et présentant au moins une languette conductrice destinée à relier la piste intermédiaire à la carte électronique et le support non conducteur présente au moins une lumière via laquelle la languette conductrice s'étend de la piste intermédiaire vers la carte électronique, l'extrémité de la languette conductrice destinée à être en contact avec la carte électronique ne s'étendant pas au-delà de l'ensemble non conducteur de sorte que la liaison entre la piste intermédiaire et la carte électronique se situe sous la face inférieure de l'ensemble non conducteur.

Selon ce mode de réalisation, les pistes conductrices de l'ensemble conducteur de l'élément de sécurité comprennent également une piste dite intermédiaire, communément appelée anneau de garde, qui permet de détecter une tentative de piratage de l'élément de sécurité, en vue d'empêcher la détection d'une ouverture du boitier : toute tentative de relier électriquement la piste centrale (ou le point central) et la piste extérieure (ou l'anneau extérieur) sous le dôme entraine forcément le contact avec l'anneau de garde, et donc une détection de tentative de piratage par le circuit de sécurité.

De même que pour les pistes centrale et extérieure, cette piste intermédiaire présente une languette pour sa connexion avec la carte électronique, cette languette s'étendant à travers une lumière prévue dans l'ensemble non conducteur de manière sensiblement verticale, de sorte à ne pas dépasser de l'élément de sécurité lorsqu'il est implanté sur la carte électronique.

Ainsi, toutes les connexions entre les pistes de l'ensemble conducteur et la carte électronique sont protégées d'un accès extérieur par le support non conducteur.

Selon une caractéristique particulière, au moins une partie des pistes extérieure, intermédiaire et/ou centrale traverse le support non conducteur au niveau de la face inférieure.

Selon ce mode de réalisation, au moins une partie d'au moins une des pistes conductrices de l'ensemble conducteur de l'élément de sécurité traverse le support non conducteur, de manière à ressortir au niveau de sa face inférieure, au même titre que les languettes prévues pour les liaisons avec la carte électronique. Cela permet ainsi de fournir des « barrières » supplémentaires en cas de tentative d'accès à ces liaisons. Ainsi, par exemple, la piste intermédiaire permet d'empêcher l'accès à la soudure entre la piste centrale et la carte électronique, ou la piste extérieure permet d'empêcher l'accès à la soudure entre la piste intermédiaire et la carte électronique.

Selon un autre mode de réalisation, l'élément de sécurité comprend une piste conductrice dite intermédiaire, soudée ou imprimée sur la carte électronique à un emplacement prédéterminé de sorte à être située à l'intérieur de la piste extérieure lorsque l'élément de sécurité est relié électriquement à la carte électronique.

Selon ce mode de réalisation, les pistes conductrices de l'élément de sécurité comprennent également une piste dite intermédiaire, communément appelée anneau de garde, qui permet de détecter une tentative de piratage de l'élément de sécurité, en vue d'empêcher la détection d'une ouverture du boitier : toute tentative de relier électriquement la piste centrale (ou le point central) et la piste extérieure (ou l'anneau extérieur) sous le dôme entraine forcément le contact avec l'anneau de garde, et donc une détection de tentative de piratage par le circuit de sécurité. Cette piste intermédiaire est directement soudée, ou imprimée à un emplacement prédéterminé sur la carte électronique sur laquelle l'élément de sécurité est implanté, de sorte à faire office d'anneau de garde à l'intérieur de la piste extérieure. Ce mode de réalisation permet d'assurer que la piste intermédiaire se situe, sur la carte électronique, à une hauteur différente de celles de la piste centrale et de la piste extérieure de l'élément de sécurité, assurant un non-contact par rapport à la partie métallique de l'élément de sécurité qui, même subissant une forte contrainte, n'entrera pas en contact avec l'anneau de garde.

Selon un aspect particulier, l'ensemble conducteur est intégré par surmoulage dans le support non conducteur pour délivrer un assemblage conducteur.

Selon ce mode de réalisation, la technique de fabrication de l'élément de sécurité est facilitée grâce à la mise en oeuvre d'un support pour les pistes conductrices, par surmoulage de ces dernières. Une telle technique de surmoulage est en effet facile à mette en oeuvre et à industrialiser.

Selon une caractéristique particulière, les surfaces supérieures de la piste extérieure et de la piste centrale sont surélevées d'une hauteur par rapport à la surface supérieure de la piste intermédiaire.

Selon ce mode de réalisation, l'anneau intermédiaire de garde se situe en léger retrait par rapport aux surface supérieures de l'anneau extérieur et du point central, permettant d'obtenir une fiabilité renforcée de l'élément de sécurité en assurant un non-contact par rapport à la partie métallique qui, même subissant une forte contrainte, n'entrera pas en contact avec l'anneau de garde.

Cette configuration permet également de minimiser les migrations de résidus de soudure entre les différentes pistes de l'élément de sécurité.

Selon un aspect particulier, l'élément de sécurité comprend en outre un élément élastiquement déformable non conducteur, noté actionneur, présentant sur sa face inférieure un évidemment adapté à la forme de la partie métallique.

Selon ce mode de réalisation, l'élément de sécurité comprend une troisième partie élastiquement déformable et non conductrice permettant d'absorber les écarts de tolérance de fabrication grâce à un effet ressort, avec très peu de fluage. Cette troisième partie correspond à un actionneur de la partie métallique et est positionné par-dessus. Il présente donc sur sa face inférieure une forme adapté à la forme du dôme. Il présente bien sûr également une forme adaptée au dispositif électronique dans lequel la carte électronique et donc l'élément de sécurité sont implantés. Selon une caractéristique particulière, la partie métallique est mobile entre l'assemblage conducteur et l'actionneur.

Ainsi, cette mobilité du dôme au sein de l'élément de sécurité permet de limiter les sollicitations dues au stress mécanique subi par l'élément de sécurité et donc de limiter la détérioration du dôme lui-même, contrairement aux techniques connues dans lesquelles le dôme soudé n'est pas robuste à l'usage. Un collage réalisé avec un adhésif faible peut être envisagé, notamment pour éviter que le dôme ne bouge pendant le process d'implantation sur la carte électronique (par exemple par refusion) ou encore pendant les phases préalables à l'utilisation de la carte électronique ou du dispositif électronique dans laquelle elle est elle-même implantée (transport par exemple). Ce léger collage ne doit cependant pas procurer une tenue forte afin d'assurer cette mobilité de la partie métallique permettant à l'élément de sécurité d'assurer sa fonction de détection d'intrusion/effraction.

Par ex, la partie métallique présente une partie centrale destinée à entrer en contact avec la piste centrale de l'ensemble conducteur et une partie périphérique destinée à entrer en contact avec la piste extérieure de l'ensemble conducteur.

Ainsi, selon ce mode de réalisation, le dôme est « étagé », afin de limiter au maximum les efforts qu'il subit.

La présente technique concerne également une carte électronique comprenant au moins un élément de sécurité tel que décrit précédemment, selon ses différents modes de réalisation.

La présente technique concerne également un terminal de paiement électronique comprenant au moins une carte électronique telle que décrite précédemment, selon ses différents modes de réalisation.

La présente technique concerne également un procédé de fabrication d'au moins un élément de sécurité tel que décrit précédemment, selon ses différents modes de réalisation. Un tel procédé comprend les étapes suivantes :
- formage de l'ensemble conducteur en une pièce de tôle comprenant la piste extérieure reliée à la piste intermédiaire reliée à la piste centrale ;
- surmoulage par un support non conducteur dudit ensemble conducteur, délivrant un assemblage conducteur ;
- suppression des liaisons entre la piste extérieure et la piste intermédiaire et entre la piste intermédiaire et la piste centrale par découpe de la pièce de tôle ;
- assemblage de la pièce métallique, de l'assemblage conducteur et d'un élément élastiquement déformable non conducteur, noté actionneur pour délivrer l'élément de sécurité.

Selon un aspect particulier, le procédé comprend une étape de conditionnement d'une pluralité d'éléments de sécurité sur un support.

La présente technique concerne également un procédé d'assemblage d'au moins un élément de sécurité tel que décrit précédemment, selon ses différents modes de réalisation, sur une carte électronique. Un tel procédé comprend les étapes suivantes :
- obtention dudit au moins un élément de sécurité sur un support obtenu par un procédé de fabrication tel que décrit précédemment, selon ses différents modes de de réalisation ;
- positionnement dudit au moins un élément de sécurité par soudure, sur la carte électronique, de la piste extérieure, de la piste intermédiaire et de la piste centrale via les lumières.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1a] illustre une vue éclatée de plusieurs composants d'un élément de sécurité, selon un mode de réalisation de l'invention ;
[Fig 1b] illustre une vue éclatée d'un assemblage conducteur d'un élément de sécurité, selon un mode de réalisation de l'invention ;
[Fig 2a] illustre une vue en coupe d'un élément de sécurité tel qu'illustré en figure 1b, selon un mode de réalisation de l'invention ;
[Fig 2b] illustre un agrandissement d'une partie de la vue en coupe de la figure 2a, selon un mode de réalisation de l'invention ;
[Fig 3a] illustre une vue du dessus d'un actionneur d'un élément de sécurité, selon un mode de réalisation de l'invention ;
[Fig 3b] illustre une vue du dessous d'un actionneur tel qu'illustré en figure 3a, selon un mode de réalisation de l'invention ;
[Fig 4] illustre une vue éclatée des différents composants d'un élément de sécurité, selon un mode de réalisation de l'invention ;
[Fig 5] illustre une vue du dessus d'une partie métallique d'un élément de sécurité, selon un mode de réalisation de l'invention ;
[Fig 6] illustre une vue en coupe d'un élément de sécurité assemblé, selon un mode de réalisation de l'invention ;
[Fig 7a] illustre les principales étapes d'un procédé de fabrication d'un élément de sécurité tel qu'illustré en figure 6, selon un mode de réalisation de l'invention ;
[Fig 7b] illustre le résultat, vue du dessus, de la première étape d'un procédé de fabrication tel qu'illustré en figure 7a, selon un mode de réalisation de l'invention ;
[Fig 7c] illustre le résultat, vue du dessus, après surmoulage, selon un mode de réalisation de l'invention ;
[Fig 7d] illustre le résultat, vue du dessus, de la deuxième étape d'un procédé de fabrication tel qu'illustré en figure 7a, selon un mode de réalisation de l'invention ;
[Fig 7e] illustre le résultat, vue du dessous, de la deuxième étape d'un procédé de fabrication tel qu'illustré en figure 7a, selon un mode de réalisation de l'invention ;
[Fig 8a] illustre une vue du dessous d'un ensemble conducteur d'un élément de sécurité, selon un mode de réalisation de l'invention ;
[Fig 8b] illustre un exemple de surmoulage d'un ensemble conducteur d'un élément de sécurité, selon un mode de réalisation de l'invention ;
[Fig 9a] illustre le résultat, vue du dessous, de la deuxième étape d'un procédé de fabrication tel qu'illustré en figure 7a, selon une variante du mode de réalisation de l'invention ;
[Fig 9b] illustre le résultat, vue du dessous, de la deuxième étape d'un procédé de fabrication tel qu'illustré en figure 7a, selon une variante du mode de réalisation de l'invention ;
[Fig 9c] illustre le résultat, vue en coupe, de la deuxième étape d'un procédé de fabrication tel qu'illustré en figure 7a, selon une variante du mode de réalisation de l'invention ;
[Fig 10a] illustre le résultat, vue du dessous, de la deuxième étape d'un procédé de fabrication tel qu'illustré en figure 7a, selon une autre variante du mode de réalisation de l'invention ;
[Fig 10b] illustre le résultat, vue en coupe, de la deuxième étape d'un procédé de fabrication tel qu'illustré en figure 7a, selon une autre variante du mode de réalisation de l'invention ; et
[Fig 11] illustre les principales étapes d'un procédé d'assemblage d'au moins un élément de sécurité sur une carte électronique, selon un mode de réalisation de l'invention.

### Description détaillée de modes de réalisation de l'invention

Comme indiqué précédemment, les inventeurs de la présente demande de brevet ont cherché à renforcer la fiabilité et la robustesse des éléments de sécurités, ou dômes de sécurité, destinés à être implantés sur des cartes électroniques, par exemple dans des dispositifs électroniques tels que des terminaux de paiement électronique, tout en limitant les coûts de production et d'implantation. Pour ce faire, les inventeurs ont été confrontés à différents problèmes techniques, liés aux différentes méthodes de pose de ces éléments de sécurité sur une carte électronique.

Comme déjà indiqué en relation avec l'art antérieur, la technique, bien connue, de soudure du dôme de sécurité directement sur une carte électronique, présente l'inconvénient principal d'une faible robustesse à l'usage, due notamment aux fortes contraintes et mouvements subis par les dômes soudés sur la carte électronique. Ainsi, il a été observé des fissures sur les dômes, à l'usage, car les soudures mettent les dômes en contrainte. Par ailleurs, il a également été observé une résistance très faible de certains dômes aux cycles thermiques (successions de chaud/froid, avec une présence d'humidité) notamment lorsque deux pistes de potentiels différents sont très proches. Ceci est notamment dû au fait que des résidus de soudure sont « piégés » dans l'enceinte formée par un dôme, ces résidus ou impuretés engendrant des points de faiblesse constitués par une accumulation conductrice pouvant entrainer la création d'un court-circuit.

Ce problème de robustesse n'est pas, ou peu, constaté avec des dômes collés manuellement sur une carte électronique. Cependant, les techniques actuelles de pose par collage de dômes, manuelles, présentent les deux inconvénients principaux de faible précision d'implantation et de faible rendement de pose, car un tel collage n'est pas reproductible de manière fiable. Certaines de ces techniques nécessitent également l'utilisation de matériaux coûteux.

Les inventeurs ont donc cherché à améliorer la robustesse et la fiabilité de la technique de pose des éléments de sécurité sur une carte électronique, en préférant la technique de pose par soudage, et en s'attachant à la fabrication de ces éléments de sécurité.

Le principe de la présente invention repose donc sur une conception nouvelle et inventive d'un élément de sécurité, via de nouveaux éléments composant l'élément de sécurité et leur agencement particulier, ainsi que sur la sécurisation des liaisons entre cet élément de sécurité et la carte électronique sur laquelle il est implanté.

Ainsi, l'élément de sécurité se décompose en trois parties principales, permettant non seulement d'assurer la fonction sécuritaire de détection d'une intrusion dans un dispositif électronique dans lequel il est implanté, mais également de présenter une robustesse à l'usage et à d'éventuelles attaques ciblées sur l'élément de sécurité lui-même (en vue de désactiver la détection d'intrusion).

La fonction sécuritaire de l'élément de sécurité selon la présente technique est assurée, de manière connue, par la connexion électrique entre des pistes conductrices d'un « ensemble conducteur » destiné à être relié électriquement à la carte électronique du dispositif électronique à sécuriser, et une partie métallique, dite dôme. Comme déjà décrit en relation avec l'art antérieur, lorsque l'élément de sécurité est en position de fonctionnement (par exemple implanté sur une carte électronique, dans un terminal de paiement électronique dont le boitier est fermé), une contrainte s'applique sur sa partie métallique qui entre donc en contact avec une ou plusieurs des pistes conductrices de l'ensemble conducteur, de manière à fermer un ou plusieurs circuit(s) relié(s) à un ou plusieurs dispositifs de détection d'intrusion dans le terminal de paiement électronique. Ainsi, lorsque le boitier du terminal de paiement électronique est ouvert, la contrainte appliquée sur la partie métallique de l'élément de sécurité se relâche, ouvrant le circuit et déclenchant une détection d'ouverture du boitier grâce au(x) dispositif(s) de détection d'intrusion. Par exemple, le microprocesseur mettant en oeuvre la détection d'intrusion vérifie la conformité du signal entrant dans le microprocesseur par rapport au signal sortant du microprocesseur (par exemple en comparant des tensions). Ainsi, toute ouverture du terminal de paiement électronique, ou toute connexion à la masse du terminal de paiement électronique est détectée comme une intrusion. De plus, ces signaux peuvent être chaînés afin de disposer de plusieurs endroits de détection au sein du terminal de paiement électronique, comme par exemple, au niveau de l'écran ou de la partie inférieure du boitier.

L'invention réside notamment dans l'agencement avantageux des pistes conductrices de l'ensemble conducteur dans un support non conducteur, par exemple surmoulé sur l'ensemble conducteur, permettant d'obtenir les effets techniques suivants :
- optimisation de la fabrication d'un élément de sécurité. En effet, l'intégration de l'ensemble conducteur dans un support permet une industrialisation de cette fabrication et une facilité d'implantation sur une carte électronique. Ainsi, contrairement aux techniques de l'art antérieur, l'assemblage entre la partie métallique et l'ensemble conducteur est rendu plus facile et reproductible du fait de la présence de ce support non conducteur. Cela permet donc d'optimiser les coûts de sécurisation des dispositifs dans lesquels sont implantés de tels éléments de sécurité du fait de l'optimisation des coûts de production/fabrication. De plus, comme décrit plus en détail ci-après en relation avec un mode de réalisation, l'élément de sécurité intègre un actuateur, ce qui permet de cumuler la fonction d'élément de sécurité et la fonction « actuateur » dans un même composant et donc de réaliser des économies d'échelle et de ne pas avoir à poser séparément un actuateur dans le terminal de paiement électronique ;
- fiabilité de l'implantation, par soudure, de l'élément de sécurité sur la carte électronique. En effet, la position surélevée des pistes conductrices, intégrées dans le support, par rapport à la carte électronique permet d'empêcher la « pollution » de ces pistes par des résidus de soudure, contrairement à l'art antérieur où les pistes conductrices sont soudées sur le même plan que la carte électronique. De plus, de manière particulièrement avantageuse, la liaison entre les pistes conductrices, et en particulier la piste centrale, et la carte électronique, est mise en oeuvre à l'intérieur du périmètre de l'élément de sécurité, de manière sensiblement verticale, via des excroissances partant des pistes et s'étendant jusqu'à la carte électronique, à travers le support non conducteur. Ainsi, les liaisons entre les pistes conductrices et la carte électronique ne sont pas accessibles par l'extérieur une fois l'élément de sécurité implanté sur la carte électronique.

L'invention réside également dans l'agencement particulier des pistes conductrices de l'ensemble conducteur de l'élément de sécurité, et notamment du positionnement de la piste communément appelée « anneau de garde » par rapport aux autres pistes (par exemple la piste extérieure et la piste centrale).

Il est à noter que les pistes conductrices formant l'ensemble conducteur de l'élément de sécurité peuvent présenter des formes diverses, même si elles sont souvent de forme circulaire. Ainsi, certaines formes particulières (carrées, losanges, « cacahuètes » ...) peuvent présenter l'avantage d'augmenter par exemple la distance entre les terminaisons des contacts afin qu'ils ne se situent pas en face, et ralentir ainsi les migrations.

Nous décrivons ci-après des pistes circulaires, à titre illustratif, et toute autre forme est adaptée à la mise en peu de la présente technique.

Cet « anneau de garde » est prévu notamment pour éviter le piratage de l'élément de sécurité lui-même, par exemple par un « hacker » qui souhaiterait désactiver l'élément de sécurité avant d'ouvrir le boitier d'un terminal de paiement électronique. Ce type d'attaque, connue, consiste par exemple à injecter de l'encre conductrice sous l'élément de sécurité, afin de fermer durablement le circuit de sécurité même lorsque le dôme n'est plus contraint par la fermeture du boitier du terminal de paiement électronique. Or, l'anneau de garde, connecté à la carte électronique à un autre potentiel que l'anneau extérieur, et situé selon la présente technique à l'intérieur de cet anneau extérieur (c'est-à-dire entre l'anneau extérieur et le point central de l'ensemble conducteur) permet de détecter une telle attaque par injection d'encre. En effet, une telle attaque entrainerait également une connexion de l'anneau de garde à l'anneau extérieur et au point central, ce qui peut être détecté par une modification de tension par exemple.

De ce fait, la présente technique est plus sécurisée que certaines techniques connues de l'art antérieur, dans lesquelles l'anneau « de garde », qui est un anneau de masse périphérique, est à l'extérieur du dôme. Cette configuration extérieure de l'anneau de garde est prévue notamment pour des questions de fiabilité, de manière à augmenter sa distance avec le point central et donc de limiter les possibilités d'attaques par collage conducteur. Cela permet également de protéger contre des attaques visant à faire « glisser » le dôme sur la carte électronique de manière à tenter d'accéder au point central, car dans ce cas, le dôme est susceptible de rentrer en contact avec l'anneau de garde extérieur. En revanche, une telle configuration présente l'inconvénient d'affaiblir la sécurité, car il reste possible, avec un minimum de précautions, d'accéder « sous » le dôme, et donc de tenter de pirater l'élément de sécurité en reliant durablement le dôme aux pistes conductrices même lorsqu'aucune contrainte n'est appliquée sur le dôme.

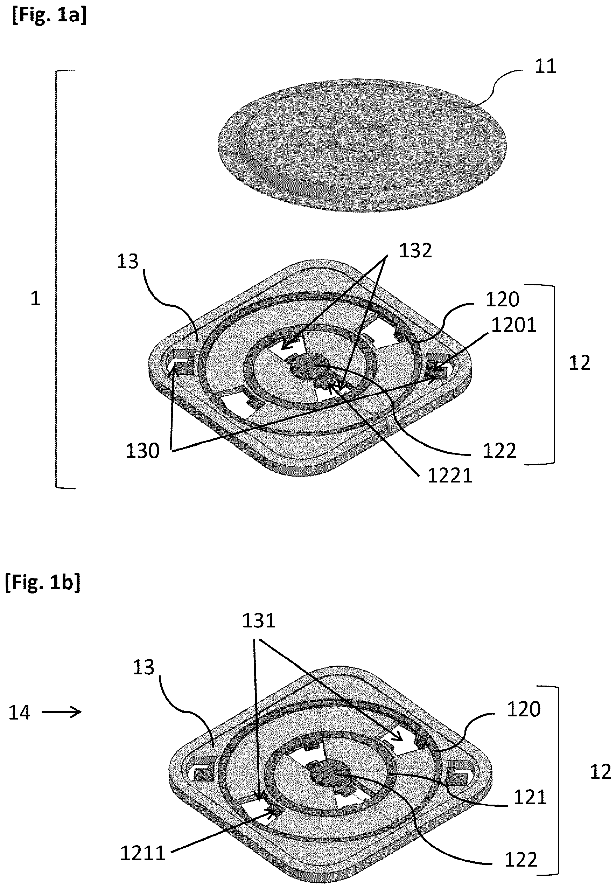

On décrit maintenant plus en détail un mode de réalisation, en relation avec les figures **Fig 1a** à **Fig 11****.**

La figure **Fig 1a** illustre une vue éclatée de plusieurs composants d'un élément de sécurité 1, comprenant, tel que décrit ci-dessus, une partie métallique 11, ou dôme métallique, et un ensemble conducteur 12 dans un support non conducteur 13. L'ensemble conducteur 12 présente au moins deux pistes conductrices, destinées à être reliées électriquement à une carte électronique, dont un anneau extérieur 120 et un point central 122. Lorsque l'élément de sécurité est en fonctionnement de détection, c'est-à-dire lorsqu'il subit une contrainte, sa partie métallique 11 repose d'une part sur l'anneau extérieur 120, via sa périphérie, et d'autre part sur le point central 122 via son centre, fermant ainsi un circuit électrique.

Par ailleurs, ces pistes conductrices sont, selon la présente technique, avantageusement logées dans un support non conducteur (par exemple une matière plastique) présentant cependant une pluralité de lumières, ou de trous traversants, afin de permettre la connexion électrique, par soudure, ou collage conducteur (selon le process industriel mis en oeuvre pour l'implantation de l'élément de sécurité sur la carte électronique), des pistes conductrices avec la carte électronique. Par exemple, deux lumières 130 sont prévues afin de connecter l'anneau extérieur à la carte électronique et deux lumières 132 sont prévues afin de connecter le point central à la carte électronique. Ces connexions, ou liaisons, entre les pistes conductrices de l'élément de sécurité et la carte électronique sont possibles grâce à des excroissances de ces pistes conductrices, sous forme de languettes ou de « pattes », s'étendant sensiblement verticalement des pistes conductrices vers la carte électronique, au travers de ces lumières 130, 132.

Ainsi, comme illustré sur la figure **Fig 1a****,** la piste centrale 122 présente au moins une languette 1221 permettant de la connecter à la carte électronique, par exemple par soudure. Pour ce faire, la languette 1221 correspond à une prolongation de la piste centrale 122, pliée vers le bas et terminée par une partie plate destinée à être soudée sur la carte électronique. Afin d'obtenir l'effet technique recherché d'un haut niveau de sécurité de cette liaison entre la piste centrale et la carte électronique, l'extrémité plate de la languette ne dépasse pas du périmètre de l'élément de sécurité, et plus particulièrement du support non conducteur, de façon à empêcher toute tentative d'accès à cette liaison, une fois l'élément de sécurité soudé sur la carte électronique. Ces caractéristiques s'appliquent de la même manière à la liaison entre la piste extérieure 120 et la carte électronique, par l'intermédiaire d'au moins une languette 1201 correspondant à une prolongation de la piste extérieure 120, pliée vers le bas et terminée par une partie plate destinée à être soudée sur la carte électronique. La liaison entre la piste extérieure et la carte électronique n'est donc pas non plus accessible lorsque l'élément de sécurité est soudé sur la carte électronique.

Une description plus détaillée des éléments permettant cette connexion électrique est faite ci-après.

Avec un tel agencement des pistes conductrices de l'élément de sécurité 1 dans un support non conducteur 13, les inventeurs ont donc optimisé la fabrication de l'élément de sécurité, comme cela sera décrit ci-après, ainsi que renforcé la fiabilité de l'élément de sécurité en optimisant son implantation grâce à la surélévation des pistes conductrices par rapport à la carte électronique d'implantation. Plus cette surélévation est importante, moins les remontées de flux de soudure vers les plages de contacts, causes de dysfonctionnement à terme, sont probables.

Par ailleurs, la figure **Fig 1b** illustre un assemblage conducteur 14 formé d'un support non conducteur 13 et d'un ensemble conducteur 12 présentant une piste intermédiaire, notée anneau de garde 121, située entre le point central 122 et l'anneau extérieur 120. Cet anneau de garde 121 est connecté à la carte électronique via une ou plusieurs lumières 131 prévues dans le support non conducteur 13, comme pour les autres pistes conductrices.

Là encore, comme pour les pistes centrale et extérieure, l'anneau de garde 121 présente au moins une languette 1211 permettant de le connecter à la carte électronique, par exemple par soudure. Pour ce faire, la languette 1211 correspond à une prolongation de la piste intermédiaire 121, pliée vers le bas et terminée par une partie plate destinée à être soudée sur la carte électronique. La liaison entre la piste intermédiaire et la carte électronique n'est donc pas non plus accessible lorsque l'élément de sécurité est soudé sur la carte électronique.

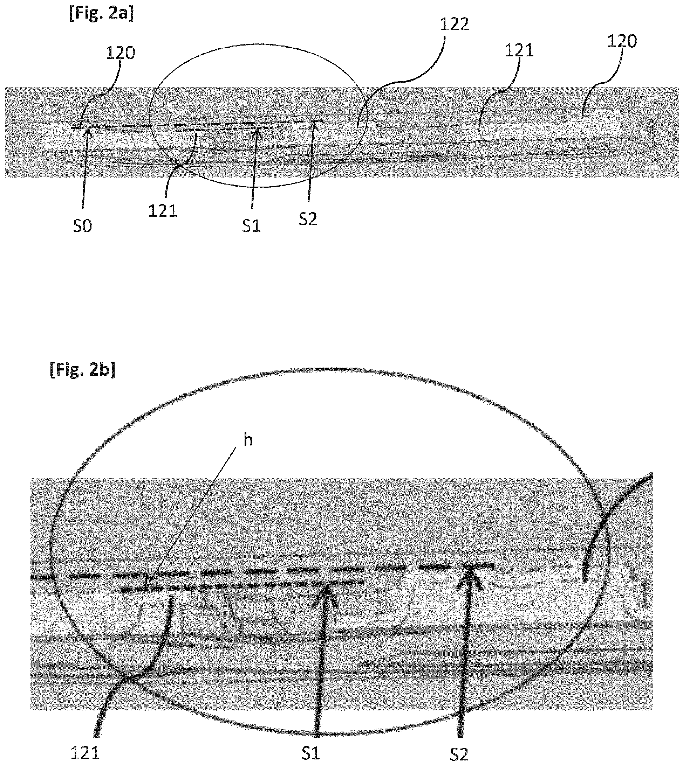

Les avantages et effets techniques de cet anneau de garde ont déjà été décrits ci-dessus, cependant, l'invention prévoit un avantage supplémentaire à cet anneau de garde, comme illustré notamment sur les figures **Fig 2a** et **Fig 2b****.**

En effet, une telle configuration d'un anneau de garde, plus petit que l'anneau extérieur et situé sous la partie métallique, est connue notamment du document de brevet US 8,358,218 délivré le 22 janvier 2013. Ce document présente un élément de sécurité composé d'un dôme métallique 172, avec une portion centrale 194, une périphérie 188 destinée à être connectée à un ensemble 170 de contacts électriques sur une surface de base 160. Cet ensemble 170 comprend un contact central 180 (en connexion avec 194 lorsque le terminal de paiement électronique est fermé), un anneau central 178, un anneau intermédiaire optionnel 176 (en plusieurs portions) et un anneau extérieur 174. Toutes ces pistes conductrices sont implantées sur une surface de base 160 et la partie métallique y est soudée via les éléments 186. Cette configuration connue présente notamment les inconvénients déjà cités :
- faible robustesse au fissurage du fait de la soudure de la partie métallique, ce qui n'est pas le cas de la présente invention ;
- faible tolérance aux impuretés, et notamment aux résidus de soudure, car il n'est pas possible de nettoyer sous le dôme, car il est « fermé » une fois soudé. Ainsi, les impuretés restent prisonnières après le process de refusion.

Une conséquence immédiate de cette solution est une tenue très limitée aux cycles thermiques et à l'humidité, car les résidus de soudure créent des migrations entre les contacts de potentiels différents, donc ici entre la masse et le point central notamment., ou entre la masse (l'anneau de garde) et l'anneau extérieur.

La présente technique ne présente pas ces inconvénients grâce à l'agencement particulier de l'anneau de garde 121 dont la surface supérieure S1 se trouve en léger retrait, c'est-à-dire plus basse, que les surfaces supérieures S0 et S2 respectivement de l'anneau extérieur 120 et du point central 122. Ceci est très visible sur les figures **Fig 2a** et **Fig 2b****,** cette dernière illustrant un « zoom » d'une partie de la figure **Fig 2a** permettant de matérialiser une hauteur h représentant cette différence entre les surfaces S1 et S2 notamment. Ainsi, l'implantation en retrait de l'anneau de garde 121 par rapport au point central 122 et à l'anneau extérieur 120 permet d'empêcher un contact avec la partie métallique 11 lorsqu'une contrainte est appliqué sur celle-ci, renforçant encore la fiabilité de l'élément de sécurité dans son ensemble.

De plus, grâce à cette différence de hauteur, un flux de soudure a beaucoup plus de distance à couvrir entre les contacts et la migration est bien plus difficile à faire. En effet, la surface des pistes conductrices n'est pas plane comme lorsque toutes les pistes conductrices se trouvent directement sur une même surface d'une carte électronique, mais présente des reliefs du fait de cette différence de hauteur h, et grâce à la mise en oeuvre du support non conducteur 13 pour le point central, l'anneau de garde et l'anneau extérieur.

Enfin, la forme particulière du point central 122 de l'ensemble conducteur 12 permet également une plus faible sensibilité aux impuretés. Ainsi, comme cela est visible notamment sur les figures **Fig 1a, Fig 1b****,** **Fig 4****,** **Fig 7b, Fig 7c** et **Fig 7c****,** le point central 122, de forme circulaire, ne présente pas une surface plane mais avec des reliefs, afin de créer des contacts non surfaciques.

De plus, pour éviter les migrations entre les plages, une mesure efficace réside dans l'éloignement des terminaisons à souder, pour les contacts de potentiels différents. Ainsi, les plages servant à souder l'anneau extérieur et les plages servant à souder l'anneau intermédiaire, ne se situent pas en face, ce qui augmentent la distance pour les migrations. De même, les plages servant à souder le point central et les plages servant à souder l'anneau intermédiaire, ne sont pas en face. Cette configuration permet d'obtenir, dans un même périmètre d'encombrement (ou diamètre si les pistes sont circulaires), les distances sont augmentées tout en augmentant les distances d'isolement « de surface » .

Selon une variante (non illustrée), l'anneau de garde peut être directement soudé ou imprimé sur la carte électronique, à un emplacement prédéterminé qui permettra de le situer à l'intérieur de la piste extérieure de l'élément de sécurité lorsque ce dernier sera implanté sur la carte électronique. Cette variante permet ainsi d'obtenir le même effet technique d'une différence de hauteur entre la surface de l'anneau de garde implanté directement sur la carte électronique, et celles des pistes extérieure et centrale portées par le support non conducteur.

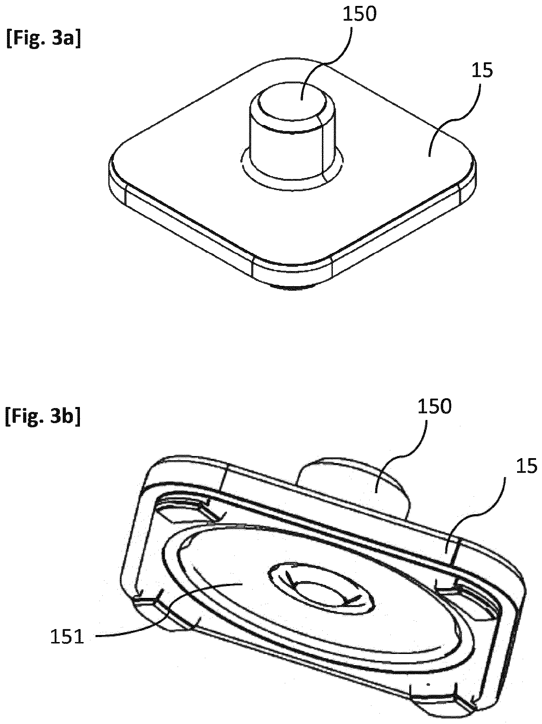

Selon une autre caractéristique de la présente technique, et comme illustré notamment sur les figures **Fig 3a** et **Fig 3b****,** l'élément de sécurité 1 comprend en outre un élément élastiquement déformable et non conducteur 15, noté actionneur, destiné à recouvrir les autres éléments de l'élément de sécurité, à savoir l'assemblage conducteur 14 (comprenant le support non conducteur 13 intégrant les pistes conductrices 120, 121 et 122 de l'ensemble conducteur 12) et la partie métallique 11. Pour ce faire, et comme illustré sur la figure **Fig 3b****,** l'actionneur présente notamment, sur sa face inférieure, un évidemment 151 correspondant et adapté à la forme de la partie métallique 11.

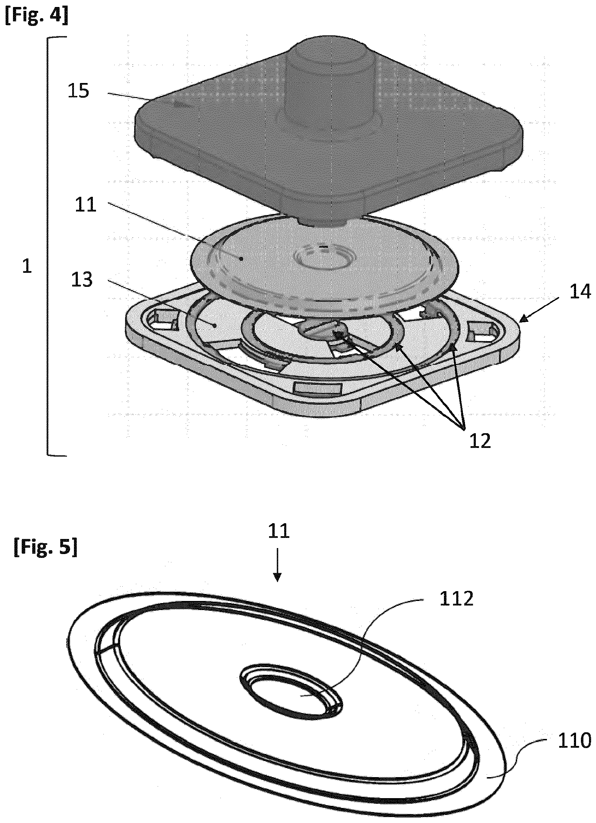

Par exemple, cette partie métallique 11 se présente telle qu'illustrée en figure **Fig 5****,** c'est-à-dire de forme circulaire avec une partie centrale 112 destinée à entrer en contact avec le point central 122 et une partie périphérique 110 destinée à entrer en contact avec l'anneau extérieur 120. La partie centrale 112 est par exemple également circulaire et conformée en creux par rapport à la plus grande portion de la partie métallique 11. La partie périphérique 110 représente une sorte de bord dont la surface est plus basse que la plus grande portion de la partie métallique 11.

Cette forme spécifique de la partie métallique 11 permet notamment de limiter les efforts subis par l'élément de sécurité et donc de renforcer sa robustesse à l'usage.

Dans ce cas, la forme de l'évidemment de l'actionneur 15 est adaptée à une telle forme spécifique de la partie métallique 11.

A noter, que cette forme de l'actionneur 15, même si elle permet d'obtenir un effort réduit, n'est pas la seule solution. Une réduction de l'épaisseur du dôme notamment, même avec une forme plus proche d'une portion de sphère, permet également d'obtenir un effort plus faible.

Par ailleurs, l'actionneur 15 présente également une excroissance cylindrique 150 sur sa face supérieure, ce qui permet notamment une meilleure préhension. En effet, une fois implanté sur la carte électronique elle-même intégrée dans un terminal de paiement électronique par exemple, l'actionneur 15 se trouve « coincé » sous le capot du terminal de paiement électronique dont on cherche à détecter l'ouverture. La combinaison des forces de ressort du dôme et des frictions de l'actionneur dans le capot permet de détecter une intrusion lors de l'ouverture du capot.

De manière avantageuse, cet actionneur 15 est fait en silicone par exemple, afin de présenter un effet ressort adéquate, avec très peu de fluage, et d'absorber les écarts de tolérance de fabrication. Cet actionneur 15 permet également de maitriser les efforts subis par le dôme en fonctionnement et d'éviter de « fausses » détections d'intrusion, notamment par exemple en cas de chute du terminal de paiement électronique qui pourrait entraîner une ouverture du circuit de sécurité ou un retournement du dôme et ainsi déclencher la détection d'une intrusion... Enfin, l'actionneur 15 a également un rôle de protection des autres composants de l'élément de sécurité.

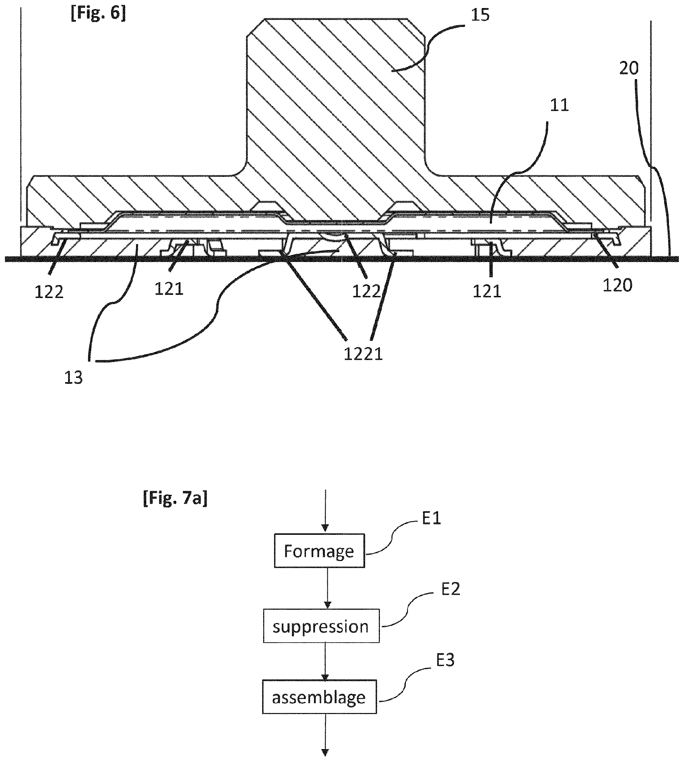

Les différents éléments composant l'élément de sécurité 1 sont illustrés en figure **Fig 4****,** dans une vue éclatée les représentant superposés, ainsi qu'en figure **Fig 6****,** dans une vue en coupe les représentant assemblés en position relâchée, les pistes conductrices 120, 121 et 122 étant soudées à la carte électronique 20.

Il est clair à la lumière des explications ci-dessus et de ces figures que la partie métallique 11 est totalement libre et mobile entre l'assemblage conducteur 14 (support non conducteur 13 intégrant les pistes conductrices de l'ensemble conducteur 12) et l'actionneur 15. Ceci constitue des avantages et des effets techniques par rapport aux solutions de l'art antérieur dans lesquelles notamment le dôme est collé ou soudé directement sur la carte électronique.

En effet, les techniques de l'art antérieur prévoyant un dôme soudé, présentent l'inconvénient majeur de rigidifier le dôme en lui-même. Cela signifie qu'une action mécanique importante sur le dôme permet de l'écraser sans rompre le contact, et qu'une fois le dôme déformé, par écrasement, une tentative d'ouverture du dispositif électronique n'est pas détectée. De plus, ces solutions posent également des problèmes de fiabilité dans le temps car la brasure et le dôme sont sollicités continuellement par le stress mécanique du dôme.

Par ailleurs, cette mobilité de la partie métallique 11, alliée à la mise en oeuvre du support non conducteur 13 pour les pistes conductrices 120, 121 et 122, permet une implantation précise et aisée sur une carte électronique, rendant possible une reproductibilité efficace et à fort rendement de la mise en oeuvre de tels éléments de sécurité, contrairement aux techniques connues requérant une soudure précise du dôme lui-même.

Enfin, la mobilité de la partie métallique 11 permet de rendre l'élément de sécurité moins vulnérable aux attaques d'un « hacker » qui chercherait à venir souder dessus un élément espion, car il prendrait le risque que le contact soit rompu entre le dôme et les pistes conductrices, et donc déclencherait une détection d'intrusion.

Il convient de noter que la partie métallique de l'élément de sécurité peut être collée avec un adhésif faible, de manière à assurer son maintien pendant les phases préalables à son utilisation, une fois la carte électronique avec l'élément de sécurité implantée dans un dispositif électronique à sécuriser, tel qu'un terminal de paiement électronique. Ainsi, pendant le process de refusion permettant d'implanter les composants sur la carte électronique, puis le procédé de fabrication du terminal de paiement électronique, ainsi que son transport, le dôme ne bouge pas suffisamment pour être mal positionné et donc inutilisable, mais reste suffisamment mobile pour jouter son rôle de détecteur d'intrusion lorsque le terminal de paiement électronique est en fonctionnement.

La solution proposée permet donc de pallier ces inconvénients des techniques de l'art antérieur et de diminuer la vulnérabilité des éléments de sécurité aux tentatives de « collage » destinées à les « désactiver ».

De plus, la haute industrialisation d'un tel élément de sécurité permet également de l'intégrer à un procédé de mise en place tel que le « pick and place » (prise et positionnement) permettant de le souder à une position très précise sur une carte électronique (ou le collage par colle conductrice, au niveau des terminaisons, puis une polymérisation par température). L'effet technique obtenu est donc la reproductibilité de la soudure extrêmement précise (par rapport à un dôme collé) et la tenue mécanique bien meilleure qu'une simple colle. Cette précision d'implantation permet de renforcer la fiabilité de la sécurisation du dispositif électronique lui-même, ce qui est primordial notamment pour une application dans des terminaux de paiement électronique. En effet, une imprécision de positionnement peut engendrer un rapprochement du dôme et des anneaux de garde ou extérieur, et donc, à cause de cette distance d'isolement réduite, réduire la tenue en climatique de l'élément de sécurité, et potentiellement créer des dysfonctionnements non désirés.

De plus, le positionnement de l'anneau de garde à l'intérieur de l'anneau extérieur de l'ensemble de pistes conductrices renforce l'aspect sécurité, rendant impossible le collage du dôme avec une encre conductrice, d'autant plus que les pistes conductrices ne sont pas directement soudées sur la carte électronique mais sont intégrées dans un support non conducteur de manière à les surélever par rapport à la surface de la carte électronique. Cette mise en oeuvre du support présente en effet l'intérêt d'empêcher la pollution de la surface entre les pistes conductrices par des résidus de soudure.

Enfin, la liberté de mouvement du dôme métallique dans l'élément de sécurité rend plus compliquée toute tentative d'attaque contre cet élément de sécurité lui-même : le dôme lui-même n'étant pas collé (ou éventuellement collé par un faible adhésif, pour tenir lors du process de refusion, tel que décrit ci-dessus), il tient uniquement grâce à la pression exercée sur lui, par l'actionneur. Tenter d'attaquer ce dôme nécessite par exemple de le coller par l'extérieur avant d'ouvrir le dispositif électronique, ce qui allonge la durée de l'intrusion et est donc défavorable à la suite de l'attaque, la durée de l'attaque étant considéré comme un critère essentiel selon la norme PCI DSS (pour « Payment Card Industry Data Security Standard » en anglais). De même, la liberté de mouvement du dôme dans l'élément de sécurité alliée à la présence d'un anneau de garde intermédiaire permet de se prémunir d'une attaque qui consisterait à retourner le dôme par un « coup de poinçon », rendant le contact durable entre le dôme et le point central de l'ensemble conducteur, même en l'absence de contrainte sur le dôme.

On présente maintenant, en relation avec les figures **Fig 7a** à **Fig 7e****,** les principales étapes d'un procédé de fabrication d'un élément de sécurité tel que décrit ci-dessus, selon les différents modes de réalisation.

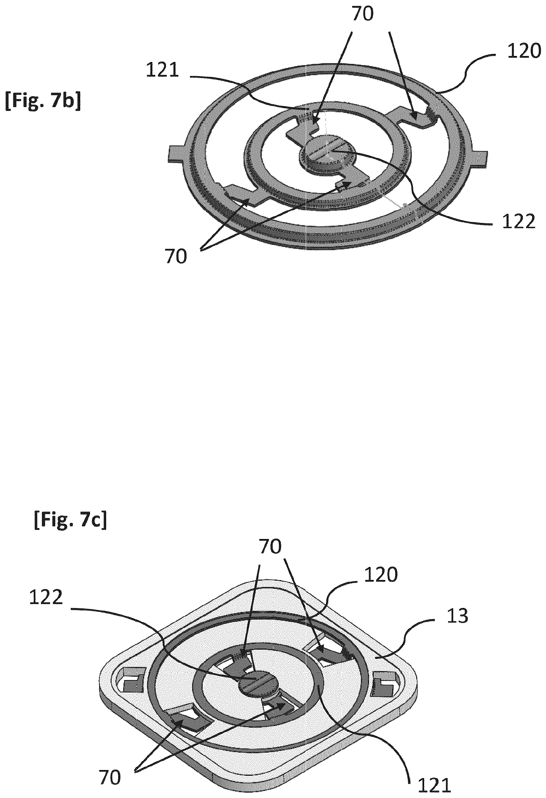

Selon ce mode de réalisation, le procédé comprend notamment une étape de formage E1 de l'ensemble conducteur délivrant une pièce de tôle comprenant les différentes pistes conductrices, dont l'anneau extérieur relié à l'anneau intermédiaire relié au point central. Cette pièce de tôle est par exemple illustrée en figure **Fig 7b****.** A l'issue de cette étape E1, les pistes conductrices sont donc reliées entre elles par des éléments de liaison 70, lesquels seront en partie découpés lors de l'étape ultérieure E2 de suppression décrite ci-après.

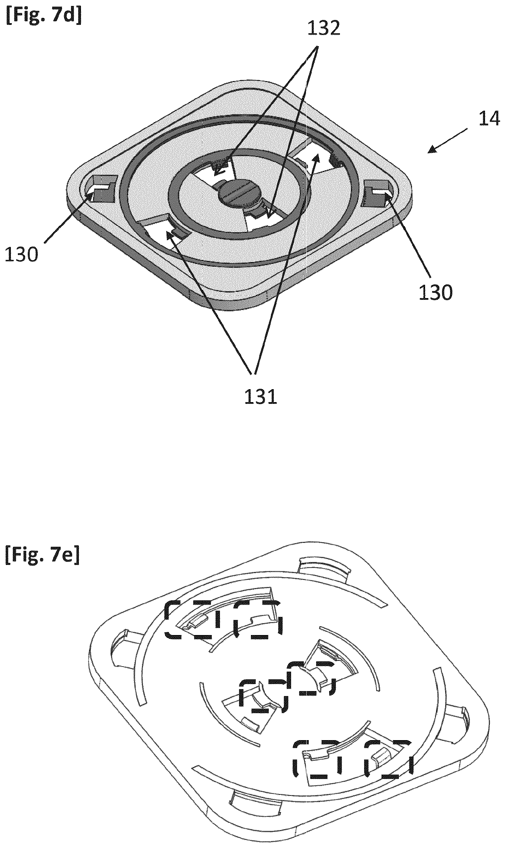

Comme déjà décrit ci-dessus, l'ensemble 12 de pistes conductrices n'est pas directement soudé sur la carte électronique, au moment de l'implantation de l'élément de sécurité sur celle-ci, mais est d'abord intégré dans un support non conducteur 13, lequel présente des ouvertures/lumières 130, 131, 132 permettant la soudure, en certains points, de chacune des pistes conductrices sur la carte électronique. Selon ce mode de réalisation, les points de soudure, c'est-à-dire les languettes 1201, 1211 et 1221, coïncident d'ailleurs avantageusement avec les parties restantes des liaisons provisoires 70 entre les pistes obtenues à l'issue de l'étape E1, comme illustré en figure **Fig 7e** décrite ci-après.

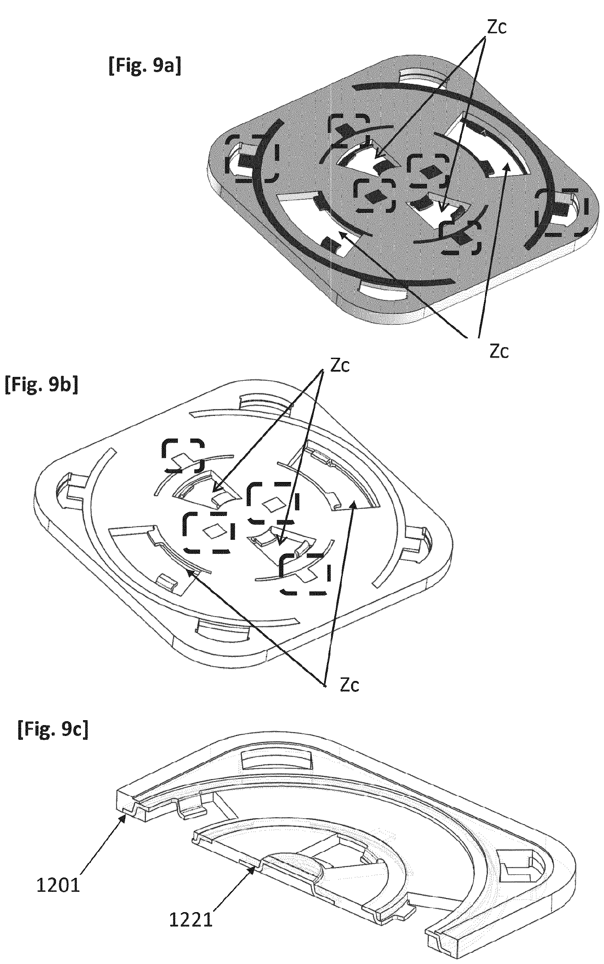

Dans une variante de réalisation, illustrée en figures **Fig 9a** à **Fig 9c** et décrite ci-après, les ouvertures prévues dans le support non conducteur pour découper les éléments de liaison 70 ne correspondent pas aux lumières 131 et 132 permettant le passage des languettes 1211 et 1221. L'obtention de cet ensemble non conducteur 13 est mis en oeuvre, selon ce mode de réalisation, par un surmoulage de l'ensemble conducteur 12 dans une matière plastique, délivrant un assemblage conducteur tel qu'illustré par exemple en figure **Fig 7c****.** D'autres méthodes d'obtention de cet ensemble conducteur sont bien sûr envisageables.

A l'issue de ce surmoulage, une étape E2 de suppression/découpe des liaisons entre les différentes pistes conductrices est mise en oeuvre, par découpe de la pièce de tôle, pour délivrer l'assemblage 14 proprement dit, tel qu'illustré par exemple en figure **Fig 7d****.** A l'issue de cette étape E2, les liaisons 70 n'existent donc plus et les différentes pistes conductrices ne sont plus reliées entre elles. On peut voir ainsi sur la figure **Fig 7d** que les lumières 130, 131 et 132 permettent la soudure, en certains points, des pistes 120, 121 et 122 sur la carte électronique, grâce à des éléments de tôle prévus à cet effet. Ces éléments sont conformés comme des languettes 1201, 1211 et 1221 s'étendant, en certains points des différentes pistes conductrices, dans une direction sensiblement orthogonale à ces pistes, vers le bas et donc vers la carte électronique lorsque l'élément de sécurité est implanté dessus.

Sur la figure **Fig 7e****,** les rectangles en pointillés illustrent les zones de découpage se confondant avec les lumières prévues pour faire passer les languettes de liaison entre les pistes conductrices et la carte électronique, comme décrit ci-dessus.

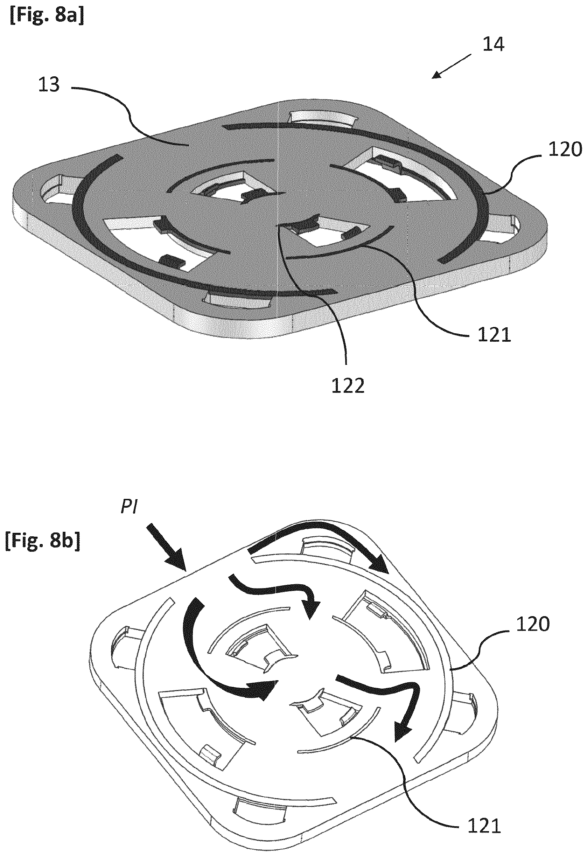

Il est à noter également que selon ce mode de réalisation, et comme illustré sur les figures **Fig 8a** et **Fig 8b****,** illustrant des vues du dessous d'un assemblage non conducteur 14, les pistes conductrices elles-mêmes traversent en partie le support non conducteur 13, de manière à renforcer la sécurité de l'élément de sécurité lorsqu'il est implanté sur une carte électronique. En effet, une partie de l'anneau de garde 121 sert ainsi de barrière supplémentaire pour empêcher un accès aux liaisons de la piste centrale 122 et une partie de la piste extérieure 120 sert quant à elle également de barrière pour empêcher un accès aux liaisons de l'anneau de garde 121.

Les pistes conductrices ne sont toutefois pas entièrement affleurantes sous la surface du support non conducteur 13, de manière à permettre le surmoulage de l'ensemble conducteur 12 dans une matière plastique en permettant à la matière plastique de passer d'une zone à l'autre, comme illustré sur la figure **Fig 8b** par les flèches représentant le flux de matière, à partir du point d'injection *PI*.

Comme indiqué ci-dessus, une variante de réalisation prévoit que les zones de découpe des éléments de liaison 70 prévues dans le support non conducteur ne correspondent pas aux lumières 131 et 132 permettant le passage des languettes 1211 et 1221. Cette variante est illustrée notamment, en vues du dessous, en figures **Fig 9a** à **Fig 9c****.**

Sur les figures **Fig 9a** et **Fig 9b****,** les rectangles en pointillés illustrent les lumières prévues pour faire passer les languettes de liaison entre les pistes conductrices et la carte électronique, alors que les zones de découpage Zc sont bien distinctes. La figure **Fig 9c** quant à elle permet d'illustrer que les extrémités des languettes 1201 et 1221 prévues pour être soudées sur la carte électronique se situent bien sous la surface du support non conducteur, et non au niveau d'une de ces zones de découpe Zc.

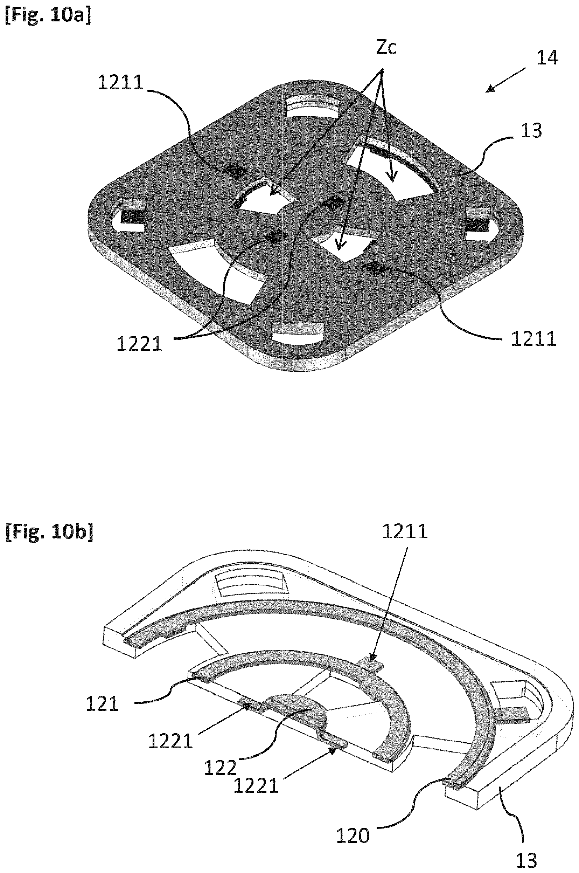

Enfin, selon encore une autre variante de réalisation, associée à la précédente sur les figures **Fig 10a** et **Fig 10b****,** les pistes conductrices ne sont pas traversantes du support non conducteur, les languettes conductrices seules 1211 et 1221 étant traversantes pour assurer la liaison entre les pistes conductrices et la carte électronique.

Ainsi, sur la figure **Fig 10a****,** illustrant un assemblage 14 vu du dessus, on constate que les zones de découpe Zc ne correspondent pas aux endroits où les languettes 1211 et 1221 sortent sous la surface du support 13. De même, sur la vue en coupe de la figure **Fig 10b****,** on observe que les languettes 1221 dépassent sous la surface du support non conducteur 13, mais pas les pistes conductrices 120, 121 et 122.

Dans ce cas, la protection contre l'accès latéral aux languettes conductrices peut se faire par d'autres moyens que le dépassement des pistes conductrices. Par exemple, il est possible d'ajouter une piste conductrice imprimée sur la carte électronique, d'un potentiel différent de la piste du support conducteur et rendant plus complexe le passage d'une tige métallique par un fraudeur.

Le procédé de fabrication de l'élément de sécurité comprend en outre une étape d'assemblage E3 de la pièce métallique 11, mobile entre l'assemblage conducteur 14 et un élément élastiquement déformable non conducteur, noté actionneur 15 et déjà décrit ci-dessus.

Comme déjà indiqué, la présente technique permet un procédé d'industrialisation. Pour ce faire, le procédé de fabrication comprend également une étape de conditionnement E4 (non illustrée) d'une pluralité d'éléments de sécurité tels qu'obtenus à l'issue de l'étape E3, sur un support, par exemple une bande. Cette mise en bande permet en effet le prélèvement automatique successif d'une pluralité d'éléments de sécurité (par exemple via une machine équipée d'un système de ventouse, d'aspiration ou de pince de chaque élément de sécurité) pour les positionner et les souder à chacun des emplacements prévus sur une carte électronique.

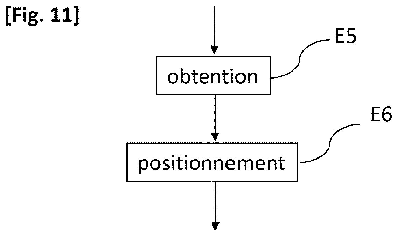

Une telle mise en oeuvre se fait par exemple selon un procédé d'assemblage d'au moins un élément de sécurité sur une carte électronique tel qu'illustré par exemple sur la figure **Fig 11****.** Selon ce mode de réalisation, une étape E5 d'obtention d'au moins un élément de sécurité sur un support obtenu par le procédé de fabrication décrit ci-dessus est mise en oeuvre puis une étape E6 de positionnement de cet élément de sécurité par soudure, sur la carte électronique, de l'anneau extérieur, l'anneau intermédiaire et le point central de l'ensemble conducteur en certains points, via les lumières prévues à cet effet dans le support non conducteur.

Ainsi, la solution technique proposée permet d'améliorer l'assemblage des dômes de sécurité sur les cartes électroniques et par conséquent la qualité de fabrication des terminaux de paiement électronique comprenant de telles cartes, grâce à un positionnement reproductible sur la carte obtenu par l'automatisation du procédé. De plus, l'automatisation de ce procédé permet également d'obtenir des gains de productivité. Cette solution technique est donc aisément transposable à un ensemble de terminaux de paiement électronique comprenant des cartes électroniques assemblés de cette manière, et facilement industrialisable.

La solution technique d'assemblage proposée augmente donc également la qualité de fabrication des terminaux de paiement tout en améliorant la sécurité.

## Revendications

1. Élément de sécurité (1) destiné à être relié électriquement à une carte électronique (20), ledit élément de sécurité comprenant au moins :
- une partie métallique (11), appelée dôme ;
- un ensemble conducteur (12) comprenant une pluralité de pistes conductrices non connectées entre elles et comprenant au moins une piste dite extérieure (120) et une piste dite centrale (122), lesdites pistes extérieure et centrale présentant chacune au moins une languette conductrice (1201, 1221) destinée à relier respectivement lesdites pistes extérieure et centrale à ladite carte électronique ;
- un support non conducteur (13) pour ladite pluralité de pistes conductrices dudit ensemble conducteur présentant des lumières (130, 132) via lesquelles lesdites languettes conductrices s'étendent desdites pistes extérieure et centrale vers ladite carte électronique ;
l'extrémité de chacune desdites languettes conductrices (1201, 1221) destinée à être en contact avec ladite carte électronique ne s'étendant pas au-delà dudit ensemble non conducteur (13) de sorte que les liaisons entre lesdites pistes extérieure et centrale et ladite carte électronique se situent sous la face inférieure dudit ensemble non conducteur (13).

2. Élément de sécurité selon la revendication 1, **caractérisé en ce que** ledit ensemble conducteur comprend en outre une piste dite intermédiaire (121) située entre ladite piste centrale (122) et ladite piste extérieure (120) et présentant au moins une languette conductrice (1211) destinée à relier ladite piste intermédiaire (121) à ladite carte électronique et **en ce que** ledit support non conducteur (13) présente au moins une lumière (131) via laquelle ladite au moins une languette conductrice (1211) s'étend de ladite piste intermédiaire (121) vers ladite carte électronique, l'extrémité de ladite languette conductrice (1211) destinée à être en contact avec ladite carte électronique ne s'étendant pas au-delà dudit ensemble non conducteur (13) de sorte que la liaison entre ladite piste intermédiaire et ladite carte électronique se situe sous ladite face inférieure dudit ensemble non conducteur (13).

3. Élément de sécurité selon la revendication 2, **caractérisé en ce qu'**au moins une partie desdites pistes extérieure (120), intermédiaire (121) et/ou centrale (122) traverse ledit support non conducteur (12) au niveau de ladite face inférieure.

4. Élément de sécurité selon la revendication 1, **caractérisé en ce qu'**il comprend une piste conductrice dite intermédiaire (121), soudée ou imprimée sur ladite carte électronique (20) à un emplacement prédéterminé de sorte à être située à l'intérieur de ladite piste extérieure (120) lorsque ledit élément de sécurité (1) est relié électriquement à ladite carte électronique (20).

5. Élément de sécurité selon la revendication 1, **caractérisé en ce que** ledit ensemble conducteur (12) est intégré par surmoulage dans ledit support non conducteur (13) pour délivrer un assemblage conducteur (14).

6. Élément de sécurité selon l'une quelconque des revendications 2 à 5, **caractérisé en ce que** les surfaces supérieures (S0, S2) de ladite piste extérieure et de ladite piste centrale sont surélevées d'une hauteur (h) par rapport à la surface supérieure (S1) de ladite piste intermédiaire.

7. Élément de sécurité selon l'une quelconque des revendications 1 à 6, **caractérisé en ce qu'**il comprend en outre un élément élastiquement déformable non conducteur (15), noté actionneur, présentant sur sa face inférieure un évidemment (151) adapté à la forme de ladite partie métallique (11).

8. Élément de sécurité selon la revendication 7, **caractérisé en ce que** ladite partie métallique (11) est mobile entre ledit assemblage conducteur (14) et ledit actionneur (15).

9. Élément de sécurité selon l'une quelconque des revendications 1 à 8, **caractérisé en ce que** ladite partie métallique (11) présente une partie centrale (112) destinée à entrer en contact avec ladite piste centrale (122) dudit ensemble conducteur (12) et une partie périphérique (110) destinée à entrer en contact avec ladite piste extérieure (120) dudit ensemble conducteur (12).

10. Carte électronique comprenant au moins un élément de sécurité selon l'une quelconque des revendications 1 à 9.

11. Terminal de paiement électronique comprenant au moins une carte électronique selon la revendication 10.

12. Procédé de fabrication d'au moins un élément de sécurité selon l'une quelconque des revendications 1 à 9, **caractérisé en ce que** ledit procédé comprend les étapes suivantes :
- formage (E1) dudit ensemble conducteur en une pièce de tôle comprenant ladite piste extérieure reliée à ladite piste intermédiaire reliée à ladite piste centrale ;
- surmoulage par un support non conducteur dudit ensemble conducteur, délivrant un assemblage conducteur ;
- suppression (E2) des liaisons entre ladite piste extérieure et ladite piste intermédiaire et entre ladite piste intermédiaire et ladite piste centrale par découpe de ladite pièce de tôle ;
- assemblage (E3) de ladite pièce métallique, dudit assemblage conducteur et d'un élément élastiquement déformable non conducteur, noté actionneur pour délivrer ledit élément de sécurité.

13. Procédé de fabrication selon la revendication 12, **caractérisé en ce qu'**il comprend une étape de conditionnement (E4) d'une pluralité d'éléments de sécurité sur un support.

14. Procédé d'assemblage d'au moins un élément de sécurité selon l'une quelconque des revendications 1 à 9, sur une carte électronique, **caractérisé en ce que** ledit procédé comprend les étapes suivantes :
- obtention (E5) dudit au moins un élément de sécurité sur un support obtenu par ledit procédé de fabrication selon la revendication 12 ou 13 ;
- positionnement (E6) dudit au moins un élément de sécurité par soudure, sur ladite carte électronique, de ladite piste extérieure, de ladite piste intermédiaire et de ladite piste centrale via lesdites lumières.

## Patentansprüche

1. Sicherheitselement (1), das dazu bestimmt ist, elektrisch mit einer elektronischen Karte (20) verbunden zu werden, wobei das Sicherheitselement mindestens Folgendes umfasst:
- einen Metallabschnitt (11), der als Kuppel bezeichnet wird;
- eine leitende Anordnung (12), die eine Vielzahl von leitenden Bahnen umfasst, die nicht miteinander verbunden sind und mindestens eine äußere Bahn (120) und mindestens eine zentrale Bahn (122) umfassen, wobei die äußere und die zentrale Bahn jeweils mindestens einen leitenden Streifen (1201, 1221) aufweisen, der dazu bestimmt ist, jeweils die äußere und die zentrale Bahn mit der elektronischen Karte zu verbinden;
- einen nicht leitenden Träger (13) für die Vielzahl von leitenden Bahnen der leitenden Anordnung, der Hohlräume (130, 132) aufweist, durch die sich der leitende Streifen von der äußeren und der zentralen Bahn zur elektronischen Karte erstrecken;
wobei das Ende jedes der leitenden Streifen (1201, 1221) dazu bestimmt ist, mit der elektronischen Karte in Kontakt zu stehen und sich nicht über die nicht leitende Anordnung (13) hinaus zu erstrecken, so dass sich Verbindungen zwischen der äußeren und der zentralen Bahnen und der elektronischen Karte unter einer Unterseite der nicht leitenden Anordnung (13) befinden.

2. Sicherheitselement nach Anspruch 1, **dadurch gekennzeichnet, dass** die leitende Anordnung ferner eine Zwischenbahn (121) umfasst, die sich zwischen der zentralen Bahn (122) und der äußeren Bahn (120) befindet und mindestens einen leitenden Streifen (1211) aufweist, der dazu bestimmt ist, die Zwischenbahn (121) mit der elektronischen Karte zu verbinden, und dadurch, dass der nicht leitende Träger (13) mindestens einen Hohlraum (131) aufweist, durch den sich der mindestens eine leitende Streifen (1211) von der Zwischenbahn (121) zur elektronischen Karte erstreckt, wobei das Ende des leitenden Streifens (1211) dazu bestimmt ist, mit der elektronischen Karte in Kontakt zu stehen und sich nicht über die nicht leitende Anordnung (13) hinaus zu erstrecken, so dass sich die Verbindung zwischen der Zwischenbahn und der elektronischen Karte unter der Unterseite der nicht leitenden Anordnung (13) befindet.

3. Sicherheitselement nach Anspruch 2, **dadurch gekennzeichnet, dass** mindestens ein Abschnitt der äußeren Bahn (120), der Zwischenbahn (121) und/oder der zentralen Bahn (122) durch den nicht leitenden Träger (12) an der Unterseite verläuft.

4. Sicherheitselement nach Anspruch 1, **dadurch gekennzeichnet, dass** es eine Zwischenleiterbahn (121) umfasst, die an einer vorbestimmten Stelle auf die elektronische Karte (20) gelötet oder aufgedruckt ist, so dass sie sich innerhalb der äußeren Bahn (120) befindet, wenn das Sicherheitselement (1) elektrisch mit der elektronischen Karte (20) verbunden ist.

5. Sicherheitselement nach Anspruch 1, **dadurch gekennzeichnet, dass** die leitende Anordnung (12) durch Umspritzen in den nicht leitenden Träger (13) integriert wird, um eine leitende Baugruppe (14) zu bilden.

6. Sicherheitselement nach einem der Ansprüche 2 bis 5, **dadurch gekennzeichnet, dass** die oberen Oberflächen (S0, S2) der äußeren Bahn und der zentralen Bahn um eine Höhe (h) relativ zu der oberen Oberfläche (S1) der Zwischenbahn erhöht sind.

7. Sicherheitselement nach einem der Ansprüche 1 bis 6, **dadurch gekennzeichnet, dass** es ferner ein nicht leitendes, elastisch verformbares Element (15) umfasst, das als Aktuator bezeichnet wird und auf seiner Unterseite eine Aussparung (151) aufweist, die an die Form des Metallabschnitts (11) angepasst ist.

8. Sicherheitselement nach Anspruch 7, **dadurch gekennzeichnet, dass** der Metallabschnitt (11) zwischen der leitenden Baugruppe (14) und dem Aktuator (15) beweglich ist.

9. Sicherheitselement nach einem der Ansprüche 1 bis 8, **dadurch gekennzeichnet, dass** der Metallabschnitt (11) einen zentralen Abschnitt (112), der dazu bestimmt ist, mit der zentralen Bahn (122) der leitenden Anordnung (12) in Kontakt zu kommen, und einen Umfangsabschnitt (110) aufweist, der dazu bestimmt ist, mit der äußeren Bahn (120) der leitenden Anordnung (12) in Kontakt zu kommen.

10. Elektronische Karte, die mindestens ein Sicherheitselement nach einem der Ansprüche 1 bis 9 umfasst.

11. Elektronisches Zahlungsterminal, das mindestens eine elektronische Karte nach Anspruch 10 umfasst.

12. Verfahren zum Herstellen mindestens eines Sicherheitselements nach einem der Ansprüche 1 bis 9, **dadurch gekennzeichnet, dass** das Verfahren die folgenden Schritte umfasst:
- Formen (E1) der leitenden Anordnung in ein Blechteil, das die äußere Bahn umfasst, die mit der Zwischenbahn verbunden ist, die mit der zentralen Bahn verbunden ist;
- Umspritzen der leitenden Anordnung mit einem nicht leitenden Träger, wodurch eine leitende Baugruppe bereitgestellt wird;
- Entfernen (E2) der Verbindungen zwischen der äußeren Bahn und der Zwischenbahn sowie zwischen der Zwischenbahn und der zentralen Bahn durch Schneiden des Blechteils;
- Montieren (E3) des Metallabschnitts, der leitenden Anordnung und eines nicht leitenden, elastisch verformbaren Elements, das als Aktuator bezeichnet wird, um das Sicherheitselement bereitzustellen.

13. Herstellungsverfahren nach Anspruch 12, **dadurch gekennzeichnet, dass** es einen Schritt des Verpackens (E4) einer Vielzahl von Sicherheitselementen auf einem Träger umfasst.

14. Verfahren zum Montieren mindestens eines Sicherheitselements nach einem der Ansprüche 1 bis 9 auf eine elektronische Karte, **dadurch gekennzeichnet, dass** das Verfahren die folgenden Schritte umfasst:
- Erhalten (E5) des mindestens einen Sicherheitselements auf einem Träger, das durch das Herstellungsverfahren nach Anspruch 12 oder 13 erhalten wird;
- Positionieren (E6) des mindestens einen Sicherheitselements durch Löten der äußeren Bahn, der Zwischenbahn und der zentralen Bahn über die Hohlräume auf der elektronischen Karte.

## Claims

1. A security element (1) intended to be electrically linked to an electronic card (20), said security element comprising at least:
- a metal part (11), called dome;
- a conductive assembly (12) comprising a plurality of conductive tracks not connected to each other and comprising at least one so-called outer track (120) and a so-called central track (122), said outer and central tracks each having at least one conductive tab (1201, 1221) intended to respectively link said outer and central tracks to said electronic card;
- a non-conductive support (13) for said plurality of conductive tracks of said conductive assembly having openings (130, 132) through which said conductive tabs extend from said outer and central tracks towards said electronic card;
the end of each of said conductive tabs (1201, 1221) intended to be in contact with said electronic card not extending beyond said non-conductive assembly (13) so that the links between said outer and central tracks and said electronic card are located under the lower face of said non-conductive assembly (13).

2. The security element according to claim 1, **characterized in that** said conductive assembly further comprises a so-called intermediate track (121) located between said central track (122) and said outer track (120) and having at least one conductive tab (1211) intended to link said intermediate track (121) to said electronic card and **in that** said non-conductive support (13) has at least one opening (131) via which said at least one conductive tab (1211) extends from said intermediate track (121) towards said electronic card, the end of said conductive tab (1211) intended to be in contact with said electronic card not extending beyond said non-conductive assembly (13) so that the link between said intermediate track and said electronic card is located under said lower face of said non-conductive assembly (13).

3. The security element according to claim 2, **characterized in that** at least a part of said outer (120), intermediate (121) and/or central (122) tracks passes through said non-conductive support (12) at said lower face.

4. The security element according to claim 1, **characterized in that** it comprises a so-called intermediate conductive track (121), welded or printed on said electronic card (20) at a predetermined location so as to be located inside said outer track (120) when said security element (1) is electrically linked to said electronic card (20).

5. The security element according to claim 1, **characterized in that** said conductive assembly (12) is integrated by overmolding into said non-conductive support (13) to deliver a conductive assembly (14).

6. The security element according to any one of claims 2 to 5, **characterized in that** the upper surfaces (S0, S2) of said outer track and said central track are raised by a height (h) relative to the upper surface (51) of said intermediate track.

7. The security element according to any one of claims 1 to 6, **characterized in that** it further comprises a non-conductive elastically deformable element (15), denoted actuator, having on its lower face a recess (151) adapted to the shape of said metal part (11).

8. The security element according to claim 7, **characterized in that** said metal part (11) is movable between said conductive assembly (14) and said actuator (15).

9. The security element according to any one of claims 1 to 8, **characterized in that** said metal part (11) has a central part (112) intended to come into contact with said central track (122) of said conductive assembly (12) and a peripheral part (110) intended to come into contact with said outer track (120) of said conductive assembly (12).

10. An electronic card comprising at least one security element according to any one of claims 1 to 9.

11. An electronic payment terminal comprising at least one electronic card according to claim 10.

12. A method for manufacturing at least one security element according to any one of claims 1 to 9, **characterized in that** said method comprises the following steps of:
- forming (E1) said conductive assembly made of a piece of sheet metal comprising said outer track linked to said intermediate track linked to said central track;
- overmolding, by a non-conductive support, said conductive assembly, delivering a conductive assembly;
- removing (E2) the links between said outer track and said intermediate track and between said intermediate track and said central track by cutting said piece of sheet metal;
- assembling (E3) said metal piece, said conductive assembly and a non-conductive elastically deformable element, denoted actuator to deliver said security element.

13. The manufacturing method according to claim 12, **characterized in that** it comprises a step of packaging (E4) a plurality of security elements on a support.

14. A method for assembling at least one security element according to any one of claims 1 to 9, on an electronic card, **characterized in that** said method comprises the following steps of:
- obtaining (E5) said at least one security element on a support obtained by said manufacturing method according to claim 12 or 13;
- positioning (E6) said at least one security element by welding, on said electronic card, of said outer track, of said intermediate track and of said central track via said openings.
